(19) Europäisches Patentamt
European Patent Office
Office européen des brevets

(11) **EP 1 560 086 B1**

(12) **FASCICULE DE BREVET EUROPEEN**

(45) Date de publication et mention
de la délivrance du brevet:
**26.09.2007 Bulletin 2007/39**

(51) Int Cl.:
*G05B 13/02* [(2006.01)]   *G05B 23/02* [(2006.01)]

(21) Numéro de dépôt: **05000244.3**

(22) Date de dépôt: **07.01.2005**

(54) **Système de test d'un pneumatique utilisant un algorithme comparant des pentes moyennes de variation d'un paramètre en fonction d'un autre**

Reifentestsysrem mit einem Algorithmus der die durchschnittliche Steigung der Variation eines Parameters, der von einem anderen abhängt, vergleicht

Test system for a tyre using an algorithm which compares the average slope of the variation of a parameter depending on another one

(84) Etats contractants désignés:
**AT BE BG CH CY CZ DE DK EE ES FI FR GB GR HU IE IS IT LI LT LU MC NL PL PT RO SE SI SK TR**

(30) Priorité: **16.01.2004 FR 0400424**

(43) Date de publication de la demande:
**03.08.2005 Bulletin 2005/31**

(73) Titulaires:
• **Société de Technologie Michelin**
**63000 Clermont-Ferrand (FR)**
• **Michelin Recherche et Technique S.A.**
**1763 Granges-Paccot (CH)**

(72) Inventeurs:
• **Fangeat, Nicolas**
**63400 Chamalieres (FR)**
• **Levy, Georges**
**Chiyoda-Ku**
**102-8176 Tokyo (JP)**

(74) Mandataire: **Bauvir, Jacques**
**M.F.P. Michelin,**
**SGD/LG/PI-F35-Ladoux**
**63040 Clermont-Ferrand Cedex 09 (FR)**

(56) Documents cités:
**EP-A- 1 372 049   DE-A- 4 030 724**
**DE-A- 4 218 034**

**Description**

ETAT DE LA TECHNIQUE

Pour rappel, le coefficient d'adhérence longitudinale µ du pneumatique est le quotient de la force longitudinale divisée par la force verticale appliquée, c'est à dire la charge appliquée sur le pneumatique (dans le cas simplifié d'un effort de freinage pur et l'homme du métier saura facilement généraliser) ; le glissement G du pneumatique vaut G = 0% lorsqu'il n'y a pas de glissement entre la vitesse du pneumatique et la vitesse relative entre le sol et l'axe géométrique de rotation du pneumatique, c'est à dire si le pneu roule librement, et G = 100% si le pneu est bloqué en rotation. Typiquement, en fonction de l'environnement (nature du sol (asphalte, béton), sec ou mouillé (hauteur d'eau), température et niveau d'usure du pneumatique), la valeur de µ en fonction du glissement G et de la nature du sol peut varier énormément (µ vaut environ 0.15 sur de la glace et environ 1.2 sur un sol sec).

Par la demande de brevet EP 1372049 publiée le 17 décembre 2003, on connaît déjà un procédé de régulation du glissement utilisant une grandeur appelée « Invariant » que les recherches des inventeurs ont permis de découvrir, cette grandeur étant ainsi appelée parce qu'elle est sensiblement constante quel que soit le pneu considéré et quelle que soit l'adhérence du sol sur lequel le pneu roule.

Si ce procédé permet de déterminer une cible de glissement pour lequel on est effectivement bien plus proche du coefficient d'adhérence maximal réel du pneu dans les circonstances de roulage réelles, il existe cependant des cas où l'on peut déterminer une cible meilleure encore pour que le pneu développe les forces souhaitées.

Le système de test d'un pneumatique proposée par l'invention, que ce soit pour une mesure ou un test sur machine ou sur véhicule, permet en particulier d'asservir le glissement G de façon à le maintenir à une valeur cible prédéterminé. Ledit glissement cible prédéterminé est plus particulièrement et de façon non limitative, choisi de telle sorte que la valeur prédéterminée du coefficient d'adhérence corresponde sensiblement à la valeur $\mu_{max}$.

BREVE DESCRIPTION DE L'INVENTION

L'invention propose un algorithme appelé « Moyen » permettant de prédire une cible idéale pour un paramètre dont on assure le pilotage dans un système de test d'un pneu.

Dans une formulation générale, l'invention propose un système de test d'un pneumatique dans lequel un paramètre caractéristique Q du fonctionnement d'un pneumatique destiné à rouler sur un sol varie en fonction d'un paramètre P selon une certaine loi, une valeur optimale dudit paramètre P étant imposée par un contrôleur de manière directe ou indirecte de façon à agir sur au moins l'un des éléments choisis dans le groupe comportant le couple de rotation appliqué au pneumatique, l'angle de braquage du pneumatique, l'angle de carrossage du pneumatique et la force verticale appliquée au pneumatique, dans lequel le contrôleur comporte des moyens pour :

- Déterminer des coefficients $A_{[avg/p]}$ par calcul direct ou par une régression appropriée, à partir d'un nombre suffisant de paires $(P_i, Q_i)$, de façon à modéliser une première courbe de variation $Q_i = f(P_i, A_{[avg/p]})$ incluant obligatoirement par convention l'origine, et la ou les paires $(Q_i, P_i)$, dans lesquelles $\mu_i$ est différent de zéro,
- Déterminer un indicateur de la pente moyenne $\alpha_1$ de ladite première courbe de variation,
- Déterminer des coefficients $B_{[avg/p]}$ par calcul direct ou par une régression appropriée, à partir d'un nombre suffisant de paires $(Q_i, P_i)$, de façon à modéliser une deuxième courbe de variation $Q_i = f(P_i, B_{[avg/p]})$ incluant la ou les paires $(Q_i, P_i)$, dans lesquelles $Q_i$ est différent de zéro,
- Déterminer un indicateur de la pente moyenne $\alpha_2$ de la deuxième courbe de variation,
- Tant que la différence entre $\alpha_1$ et $\alpha_2$ est inférieure à un seuil de pente prédéterminé, reprendre les opérations précédentes pour chaque nouvelle acquisition de paire de valeurs $(P_i, Q_i)$,
- Dès que la différence entre $\alpha_1$ et $\alpha_2$ dépasse le seuil de pente prédéterminé, déterminer un glissement cible $P^{Cavg}$ en utilisant au moins la dernière paire de valeurs $(P_i, Q_i)$.

Le résultat recherché est de maintenir la valeur d'un paramètre Q à une valeur choisie en fonction de l'objectif du test. Dans le présent mémoire, on décrit en détails une application au contrôle du glissement d'un pneu, typiquement pendant une manoeuvre de freinage. Enfin, on évoque une application visant au contrôle de la dérive du pneu.

Dans le premier cas, le paramètre P est le glissement G du pneumatique et le paramètre caractéristique Q est le coefficient d'adhérence µ du pneumatique, l'invention proposant un système de test d'un pneumatique, utilisant des moyens pour imprimer à un pneu destiné à rouler sur le sol un effort longitudinal, des moyens de modulation de l'effort longitudinal utilisant au moins un paramètre « glissement cible » qui est le glissement visé dans la rotation du pneu sur le sol, et des moyens pour calculer le paramètre $G^{Opt}$ lors de chaque activation des moyens pour imprimer au pneu un effort longitudinal, pour des niveaux « i » successifs de l'effort longitudinal correspondant chacun à un glissement $G_i$, de la façon suivante :

- Déterminer des coefficients $A_{[avg / p]}$ par calcul direct ou par une régression appropriée, à partir d'un nombre suffisant de paires ($\mu_i$, $G_i$), de façon à modéliser une première courbe de variation $\mu_i = f(G_i, A_{[avg / p]})$ incluant obligatoirement par convention l'origine, et la ou les paires ($\mu_i$, $G_i$), dans lesquelles $\mu_i$ est différent de zéro,
- Déterminer un indicateur de la pente moyenne $\alpha_1$ de ladite première courbe de variation,
- Déterminer des coefficients $B_{[avg / p]}$ par calcul direct ou par une régression appropriée, à partir d'un nombre suffisant de paires ($\mu_i$, $G_i$), de façon à modéliser une deuxième courbe de variation $\mu_i = f(G_i, B_{[avg / p]})$ incluant la ou les paires ($\mu_i$, $G_i$), dans lesquelles $\mu_i$ est différent de zéro,
- Déterminer un indicateur de la pente moyenne $\alpha_2$ de la deuxième courbe de variation,
- Tant que la différence entre $\alpha_1$ et $\alpha_2$ est inférieure à un seuil de pente prédéterminé, reprendre les opérations précédentes pour chaque nouvelle acquisition de paire de valeurs ($G_i$, $\mu_i$),
- Dès que la différence entre $\alpha_1$ et $\alpha_2$ dépasse le seuil de pente prédéterminé, déterminer un glissement cible $G^{Cavg}$ en utilisant au moins la dernière paire de valeurs ($G_i$, $\mu_i$).

L'application de choix de la présente invention réside dans le pilotage du glissement d'une roue en freinage sur une machine ou un véhicule de test. Toute la description suivante concerne dans ce cas un dispositif de modulation de l'effort longitudinal qui agit sur la commande de freinage. Indiquons une fois pour toutes que dans ce cas, on initialise (i=0) les opérations indiquées ci-dessus, et plus en détails ci-dessous, à chaque début de manoeuvre de freinage. Mais si l'on décide d'appliquer la présente invention au pilotage du glissement d'une roue en accélération, le dispositif de modulation de l'effort longitudinal agit sur le couple moteur aux roues et on initialise (i=0) les opérations indiquées à chaque demande de variation du couple moteur supérieure à un seuil de couple prédéterminé.

Notons aussi que, dans le contexte de la présente invention, peu importe que la bande de roulement dont on traite la caractéristique d'adhérence soit celle d'un pneumatique ou d'un bandage élastique non pneumatique ou encore d'une chenille. Les termes « bande de roulement », « pneu » ou « pneumatique », « bandage », « bandage élastique », « chenille » ou même « roue » doivent être interprétés comme équivalents. Remarquons aussi que la détermination des valeurs du coefficient d'adhérence $\mu_i$, pour chaque glissement $G_i$ peut se faire par mesure directe ou par estimation à partir d'autres mesures ou de l'estimation d'autres grandeurs comme l'effort dans le plan du sol et la charge verticale.

BREVE DESCRIPTION DES FIGURES

Les figures suivantes montrent :

La figure 1 illustre l'algorithme Moyen ;
La figure 2 illustre un traitement particulier des premières acquisitions de mesures ou d'estimations ;
La figure 3 illustre plus en détails ledit traitement particulier ;
La figure 4 illustre un autre traitement particulier des acquisitions de mesures ou d'estimations.

DESCRIPTION DU MEILLEUR MODE DE REALISATION DE L'INVENTION

L'algorithme « Moyen » consiste à détecter le changement dans la courbure de la courbe $\mu(G)$. On comprend en effet qu'un tel changement est révélateur de la proximité du maximum d'adhérence. Pour cela, on traite les mesures ou les estimations des valeurs de glissement et de coefficient d'adhérence associées à deux régressions dont l'une vise à modéliser une courbe de variation qui passe obligatoirement par l'origine et dont l'autre vise à modéliser une courbe de variation qui ne passe pas obligatoirement par l'origine, c'est à dire dont le premier point est laissé libre.

De préférence, on ajoute une deuxième condition provoquant la détermination du glissement cible en utilisant au moins la dernière paire de valeurs ($G_i$, $\mu_i$), la deuxième condition étant dès que $G_i$ dépasse un seuil prédéterminé, par exemple 15%.

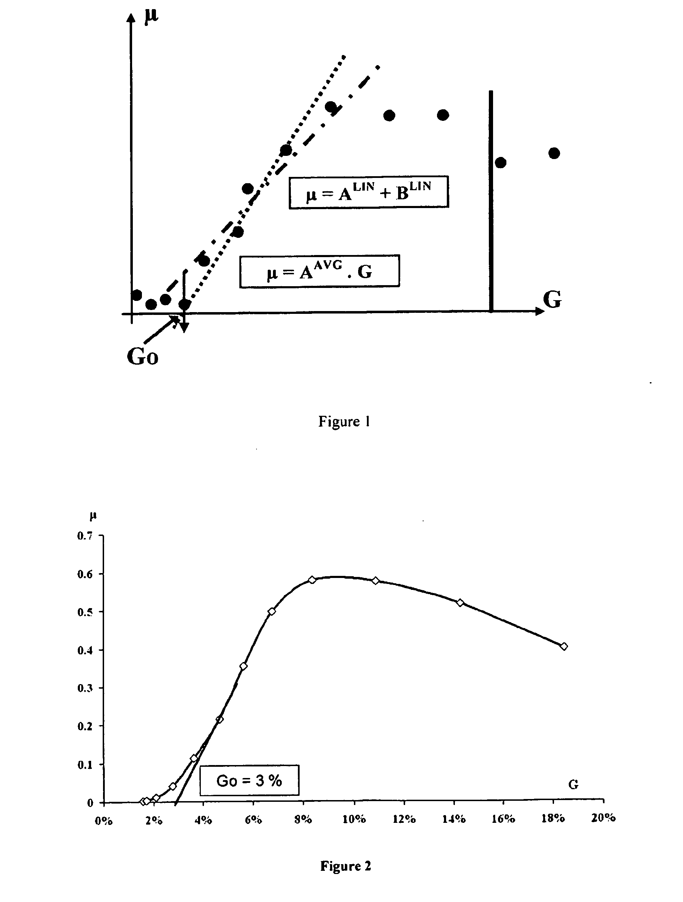

Il est tout particulièrement indiqué d'utiliser des régressions linéaires. Dans ce cas, on regarde la différence entre deux régressions linéaires, comme illustré à la figure 1. Dans ce cas,

- La première courbe de variation, représentée par un trait pointillé à la figure 1, est une première droite $\mu_i = A_{avg} \bullet G_i$, incluant par convention l'origine (à une correction $G_0$ près, correction qui sera expliqué plus loin) et la ou les paires ($\mu_i$, $G_i$), obtenue par une première régression linéaire calculant un premier coefficient $A_{avg}$,
- La deuxième courbe de variation, représentée par en trait d'axe à la figure 1 (courbe moins verticale), est une deuxième droite $\mu_i = A_{lin} \bullet G_i + B_{lin}$ incluant la ou les paires ($\mu_i$, $G_i$), que l'on laisse libre de ne pas passer par l'origine, et est obtenue par une deuxième régression linéaire calculant des coefficients $A_{lin}$ et $B_{lin}$ (ce qui n'exclut pas une correction $G_0$ qui sera expliqué plus loin).

Bien entendu, s'agissant de régressions linéaires, les indicateurs sont directement les pentes respectives $\alpha_1$

et $\alpha_2$ de chacune des droites.

Il a été déterminé expérimentalement que, dans le cas de modélisation par des droites (régressions linéaires), le seuil de pente prédéterminé pour la différence entre $\alpha_1$, et $\alpha_2$ est de préférence de l'ordre de 30%.

Au final, le glissement cible $G^{Cavg}$ retenu peut être tout simplement égal à la dernière valeur $G_i$. En alternative et d'une façon plus précise, on détermine le glissement cible $G^{Cavg} = \beta \cdot \dfrac{\mu^{MAX}}{A^{AVG}}$ avec $\beta$ un paramètre de mise au point. Quand on parle dans le présent mémoire d'un paramètre de mise au point, cela signifie que, même s'il existe pour ce paramètre une valeur ou une plage de valeurs représentatives d'une réalité physique, on peut en pratique utiliser arbitrairement ce paramètre comme un bouton de réglage fin du fonctionnement pratique du système de test d'un pneumatique. Ajoutons simplement que le paramètre $\beta$ présente une analogie avec l'Invariant, ce qui se traduit pour $\beta$ par une valeur d'environ 1,04 à rapprocher de la valeur 0,58 pour l'Invariant.

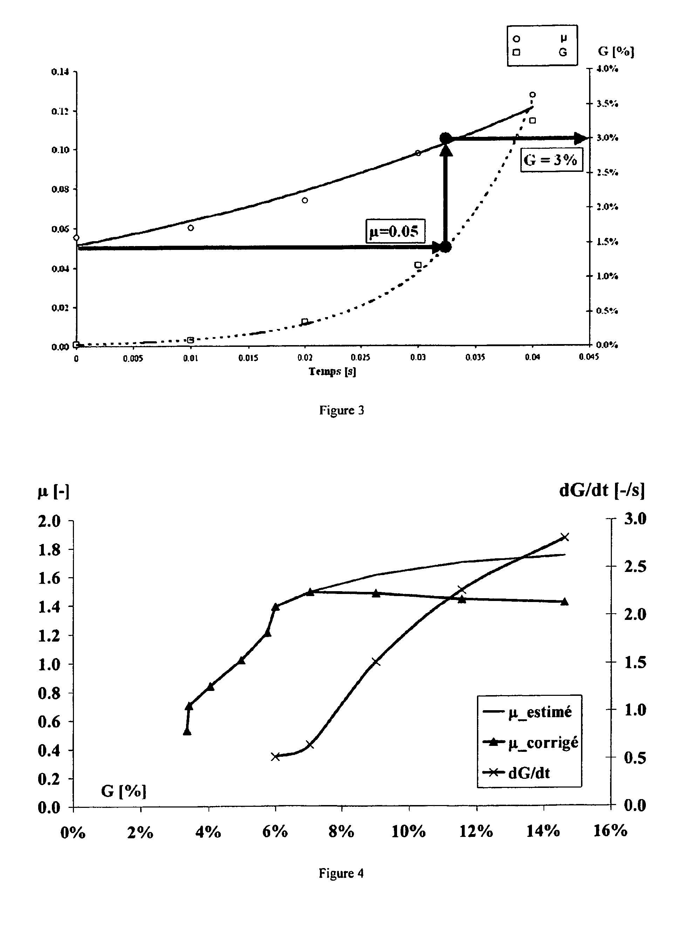

Il est proposé ci-dessous quelques corrections aux valeurs faibles de glissement et coefficient d'adhérence obtenues au tout début d'une manoeuvre de freinage. Au début des freinages, il a été constaté que la courbe $\mu(G)$ peut présenter un comportement étrange. Le but de cette première partie de l'algorithme est de corriger ce comportement. Aux figures 2 et 3, on peut voir que sur un sol mouillé, le pied de la courbe $\mu(G)$ ne semble pas linéaire et que pour un $\mu$ nul, le glissement ne l'est pas. Ceci est probablement dû aux erreurs dans la valeur du glissement mesuré. Cela n'est à l'évidence pas représentatif des phénomènes physiques dans le contact de la bande de roulement sur le sol. Cela est gênant pour les algorithmes de calcul du glissement cible qui sont basés sur l'étude de la pente de la courbe $\mu(G)$. Bien entendu, cela est très dépendant des moyens technologiques concrets mis en oeuvre pour acquérir ces informations. Dès lors, les indications fournies dans ce contexte sont de simples suggestions qu'il est utile d'appliquer si l'on fait face à ce problème, mais qui ne sont pas limitatives. Plus généralement, il est utile de corriger autoritairement la forme du pied de la courbe de variation du coefficient d'adhérence en fonction du glissement si elle présente une allure fort peu plausible.

La première partie du traitement des données va donc constituer à calculer la valeur du glissement à partir de laquelle on peut utiliser les données pour calculer de façon fiable un glissement cible ou le glissement optimal. Convenons d'appeler ce glissement $G_0$. La figure 2 montre que ce glissement $G_0$ vaut environ 3%. On obtient une allure plus plausible de la courbe $\mu(G)$ en reliant $G_0$ à la partie sensiblement linéaire de la partie croissante de la courbe.

Dès lors, de préférence, avant toutes les opérations exploitant la courbe de variation de $\mu_i$ en fonction de $G_i$, on procède à une correction du départ de ladite courbe en éliminant les premières paires réelles $(\mu_i, G_i)$ tant que la variation de $\mu_i$ en fonction de $G_i$ n'est pas sensiblement constante et en recherchant le glissement $G_0$ associé à un coefficient d'adhérence nul (ceci n'étant bien entendu pas limitatif) tel que la paire $(0, G_0)$ et les paires non éliminées $(\mu_i, G_i)$ sont sensiblement alignées, et utilisant une courbe partant de $(0, G_0)$ et rejoignant les paires non éliminées $(\mu_i, G_i)$, de sorte que, pour toute valeur de $G_i$ plus grande que $G_0$, $G_i$ est remplacée par $G_i - G_0$.

Pour cela, par exemple, on utilise un algorithme qui comporte les étapes suivantes:

- éliminer systématiquement toutes les valeurs du glissement associées à un coefficient d'adhérence inférieur à 0,01 ;
- Calculer de façon continue des régressions de $\mu$ et G en fonction du temps, de préférence des régressions exponentielles vu l'allure du pied de la courbe dans l'exemple illustré au moyen de la figure 2 et de la figure 3 :

$$\mu = e^{A^{\mu} \cdot (t - T^{Start}) + B^{\mu}} \, , \, G = e^{A^{G} \cdot (t - T^{Start}) + B^{G}}$$

On peut considérer que les valeurs acquises sont représentatives de la réalité lorsque le coefficient d'adhérence estimé ou mesuré est supérieur à 0,1 ou lorsque le glissement dépasse 4%.

La figure 3 illustre la façon de déterminer $G_0$ à partir des courbes donnant les valeurs acquises respectivement pour le coefficient d'adhérence en fonction du temps et pour le glissement en fonction du temps. On cherche la valeur du temps pour laquelle la régression sur la courbe de $\mu$ vaut une certaine valeur, par exemple 0,05 (voir le segment horizontal entre une abscisse nulle et une ordonnée valant 0,05 et la courbe en pointillés). La valeur de $G_0$ sera la valeur de la régression sur la courbe du glissement à cet instant (voir le segment vertical entre le point précédemment obtenu et un point sur la courbe en trait continu, donnant la valeur du glissement $G_0$).

On procède donc, avant toutes les opérations exploitant la courbe de variation de $\mu_i$ en fonction de $G_i$, à une correction du départ de ladite courbe en éliminant les premières paires réelles $(\mu_i, G_i)$ tant que la variation de $\mu_i$, en fonction de $G_i$ n'est pas sensiblement constante et en recherchant le glissement $G_0$ associé à un coefficient d'adhérence nul tel que la paire $(0, G_0)$ et les paires non éliminées $(\mu_i, G_i)$ sont sensiblement alignées, et utilisant une courbe partant

de $(0, G_0)$ et rejoignant les paires non éliminées $(\mu_i, G_i)$. Ensuite, dans tous les algorithmes utilisés, pour toute valeur de $G_i$ plus grande que $G_0$, $G_i$ est remplacée par $G_i - G_0$.

On a jusqu'à présent supposé calculées ou estimées des valeurs de $\mu$. Cependant, dans certains cas, le mode d'obtention du coefficient d'adhérence (à partir de l'effort de freinage lui-même estimé sur la base par exemple de la pression de freinage compte tenu des caractéristiques particulières du système de dreinage et à partir de la vitesse de roue) ne donne pas de résultat satisfaisant (la courbe $\mu(G)$ calculée est trop plate ou continûment ascendante). On sait que cela n'est pas réaliste. Pour corriger ce problème, une correction numérique du $\mu$ calculé peut être mise en place. Cette correction est basée sur la vitesse d'évolution du glissement en fonction du temps. En effet, si la vitesse de la roue (et donc le glissement) s'emballe de façon rapide, c'est que l'on se trouve dans la zone instable de la courbe $\mu$ (G). Donc la courbe $\mu(G)$ devrait décroître, ce que l'on met à profit de la façon suivante :

$$\mu^{Corr} = \mu^{acquis} \cdot \left[ Max\left( \frac{dG}{dt}; 1 \right) \right]^{-ACorr}$$

où « Acorr » est un coefficient de mise au point et peut être spécifique à chaque algorithme. Par exemple, une bonne valeur pratique s'est avérée être 0.2 pour l'algorithme «Moyen ». La figure 4 illustre cette correction. Grâce à cette correction, la courbe $\mu(G)$ retrouve une forme certainement plus conforme à la réalité physique, ce qui permet aux algorithmes de produire des cibles fiables.

Remarquons que, si la valeur du $\mu_{max}$ est en elle-même modifiée par cette correction, tous les algorithmes utilisés se basent sur la forme de la courbe et non sur ses valeurs. Le lecteur est également renvoyé à la demande de brevet précitée où l'on a fait ressortir que l'algorithme « Invariant » permet de calculer une cible de glissement sans même calculer la valeur exacte du coefficient d'adhérence associé, celui-ci étant inutile au bon fonctionnement de l'asservissement en glissement d'une roue.

Dans la demande de brevet précitée, on a démontré la possibilité d'autre applications de l'algorithme « Invariant », par exemple à l'analyse de la poussée de dérive développée par un pneumatique ou bandage élastique dans une zone de fonctionnement proche de la saturation de la poussée de dérive. C'est en raison de la similarité des lois de variation de ces phénomènes physique. De la même façon, la présente invention a des applications plus larges que le contrôle du glissement au cours d'un test de pneumatique. Pour clore le sujet, citons simplement (sans que même cette addition ne soit limitative comme on l'aura compris) que l'invention s'applique aussi à un système de test d'un pneumatique visant à prédire la valeur de l'angle de dérive $\delta$ d'un pneumatique où la force latérale (dite aussi « poussée de dérive ») est maximale. Il s'agit de prévoir quand le pneu atteindra son maximum et donc ne sera plus capable de maintenir la poussée de dérive, afin de pouvoir maintenir le fonctionnement du pneumatique à une valeur prédéterminée de la poussée de dérive $F_{det}$. Pour maintenir le fonctionnement du pneumatique à une valeur prédéterminée, il est là aussi utile d'estimer une cible pour l'angle de dérive par un algorithme « Moyen ».

Dans ce cas, le paramètre P est l'angle de dérive $\delta$ du pneumatique et le paramètre caractéristique Q est la poussée de dérive $F^{det}$ du pneumatique. Il s'agit de prévoir quand le pneu atteindra la poussée transversale maximale qu'il est capable de développer. Pour cela, il est là aussi utile d'estimer une cible par un algorithme « Moyen ».

Dans ce cas, l'invention concerne un système de test en glissement d'un pneumatique, utilisant des moyens pour imprimer un angle de dérive à un pneu en test sur un sol, les moyens étant équipé d'un système de commande d'un paramètre « $\xi$ » en fonction des ordres provenant d'un moyen de commande du test, et en fonction des ordres délivrés par un contrôleur visant à maintenir le fonctionnement du pneumatique à une valeur prédéterminée de la poussée de dérive $F^{det}$, le contrôleur utilisant au moins une valeur optimale $\delta^{Opt}$ de l'angle de dérive correspondant à la valeur maximale de la poussée de dérive $F^{det}$, ledit contrôleur comportant des moyens pour effectuer les opérations suivantes :

- lors de chaque activation du système de commande de variation de $\xi$, pour des niveaux « i » différents d'angle de dérive, relever différentes valeurs de $F_{Yi}$, et l'angle de dérive associé $\delta_i$ obtenue par estimation ou mesure directe,
- Déterminer des coefficients $A_{[avg/p]}$ par calcul direct ou par une régression appropriée, à partir d'un nombre suffisant de paires $(F, \delta_i)$, de façon à modéliser une première courbe de variation $F_i = f(\delta_i, A_{[avg/p]})$ incluant obligatoirement par convention l'origine, et la ou les paires $(F_i, \delta_i)$, dans lesquelles $\mu_i$ est différent de zéro,
- Déterminer un indicateur de la pente moyenne $\alpha_1$ de ladite première courbe de variation,
- Déterminer des coefficients $B_{[avg/P]}$ par calcul direct ou par une régression appropriée, à partir d'un nombre suffisant de paires $(F_i, \delta_i)$, de façon à modéliser une deuxième courbe de variation $F_i = f(\delta_i, B_{[avg/p]})$ incluant la ou les paires $(F_i, \delta_i)$, dans lesquelles $\mu_i$ est différent de zéro,
- Déterminer un indicateur de la pente moyenne $\alpha_2$ de la deuxième courbe de variation,
- Tant que la différence entre $\alpha_1$ et $\alpha_2$ est inférieure à un seuil de pente prédéterminé, reprendre les opérations précédentes pour chaque nouvelle acquisition de paire de valeurs $(\delta_i, F_i)$,

• Dès que la différence entre $\alpha_1$ et $\alpha_2$ dépasse le seuil de pente prédéterminé, déterminer un glissement cible $G^{Cavg}$ en utilisant au moins la dernière paire de valeurs $(\delta_i, F_i)$.

**Revendications**

1. Système de test d'un pneumatique, dans lequel un paramètre caractéristique Q du fonctionnement d'un pneumatique en test varie en fonction d'un paramètre P selon une certaine loi, une valeur optimale dudit paramètre P étant imposée par un contrôleur de manière directe ou indirecte de façon à agir sur au moins l'un des éléments choisis dans le groupe comportant le couple de rotation appliqué au pneumatique, l'angle de braquage du pneumatique, l'angle de carrossage du pneumatique et la force verticale appliquée au pneumatique, dans lequel le contrôleur comporte des moyens pour :

   • Déterminer des coefficients $A_{[avg / p]}$ par calcul direct ou par une régression appropriée, à partir d'un nombre suffisant de paires $(P_i, Q_i)$, de façon à modéliser une première courbe de variation $Q_i = f(P_i, A_{[avg / p]})$ incluant obligatoirement par convention l'origine, et la ou les paires $(Q_i, P_i)$, dans lesquelles $\mu_i$ est différent de zéro,

   **caractérisé en ce que** le contrôleur comporte des moyens pour :

   • Déterminer un indicateur de la pente moyenne $\alpha_1$ de ladite première courbe de variation,
   • Déterminer des coefficients $B_{[avg/p]}$ par calcul direct ou par une régression appropriée, à partir d'un nombre suffisant de paires $(Q_i, P_i)$, de façon à modéliser une deuxième courbe de variation $Q_i = f(P_i, B_{[avg / p]})$ incluant la ou les paires $(Q_i, P_i)$, dans lesquelles $Q_i$ est différent de zéro,
   • Déterminer un indicateur de la pente moyenne $\alpha_2$ de la deuxième courbe de variation,
   • Tant que la différence entre $\alpha_1$ et $\alpha_2$ est inférieure à un seuil de pente prédéterminé, reprendre les opérations précédentes pour chaque nouvelle acquisition de paire de valeurs $(P_i, Q_i)$,
   • Dès que la différence entre $\alpha_1$ et $\alpha_2$ dépasse le seuil de pente prédéterminé, déterminer un glissement cible $P^{Cavg}$ en utilisant au moins la dernière paire de valeurs $(P_i, Q_i)$.

2. Système de test d'un pneumatique selon la revendication 1, dans lequel le paramètre P est le glissement G du pneumatique et le paramètre caractéristique Q est le coefficient d'adhérence $\mu$ du pneumatique, le système comportant des moyens pour imprimer au pneu un effort longitudinal, des moyens de modulation de l'effort longitudinal et des moyens pour calculer le paramètre glissement $G^{Opt}$ lors de chaque activation des moyens pour imprimer au pneu un effort longitudinal de la façon suivante :

   • Déterminer des coefficients $A_{[avg/p]}$ par calcul direct ou par une régression appropriée, à partir d'un nombre suffisant de paires $(\mu_i, G_i)$, de façon à modéliser une première courbe de variation $\mu_i = f(G_i, A_{[avg/p]})$ incluant obligatoirement par convention l'origine, et la ou les paires $(\mu_i, G_i)$, dans lesquelles $\mu_i$ est différent de zéro,
   • Déterminer un indicateur de la pente moyenne $\alpha_1$ de ladite première courbe de variation,
   • Déterminer des coefficients $B_{[avg/ p]}$ par calcul direct ou par une régression appropriée, à partir d'un nombre suffisant de paires $(\mu_i, G_i)$, de façon à modéliser une deuxième courbe de variation $\mu_i = f(G_i, B_{[avg/p]})$ incluant la ou les paires $(\mu_i, G_i)$, dans lesquelles $\mu_i$ est différent de zéro,
   • Déterminer un indicateur de la pente moyenne $\alpha_2$ de la deuxième courbe de variation,
   • Tant que la différence entre $\alpha_1$ et $\alpha_2$ est inférieure à un seuil de pente prédéterminé, reprendre les opérations précédentes pour chaque nouvelle acquisition de paire de valeurs $(G_i, \mu_i)$,
   • Dès que la différence entre $\alpha_1$ et $\alpha_2$ dépasse le seuil de pente prédéterminé, déterminer un glissement cible $G^{Cavg}$ en utilisant au moins la dernière paire de valeurs $(G_i, \mu_i)$.

3. Système de test d'un pneumatique selon la revendication 2 dans lequel, dès que le glissement $G_i$ dépasse un seuil prédéterminé, on détermine le glissement cible $G^{Cavg}$ en utilisant au moins la dernière paire de valeurs $(G_i, \mu_i)$.

4. Système de test d'un pneumatique selon la revendication 2 ou 3 dans lequel :

   • La première courbe de variation est une première droite $\mu_i, = A_{avg} \cdot G_i$, incluant par convention l'origine, et la ou les paires $(\mu_i, G_i)$, obtenue par une première régression linéaire calculant un premier coefficient $A_{avg}$,
   • La deuxième courbe de variation est une deuxième droite $\mu_i = A_{lin} \cdot G_i + B_{lin}$ incluant la ou les paires $(\mu_i, G_i)$, obtenue par une deuxième régression linéaire calculant des coefficients $A_{lin}$ et $B_{lin}$.

**5.** Système de test d'un pneumatique selon l'une des revendications 2 à 4, dans lequel on détermine le glissement cible $G^{Cavg}$ comme étant égal à la dernière valeur $G_i$.

**6.** Système de test d'un pneumatique selon l'une des revendications 2 à 4, dans lequel on détermine le glissement cible $G^{Cavg} = \beta \cdot \dfrac{\mu^{MAX}}{A^{AVG}}$ avec $\beta$ un paramètre de mise au point.

**7.** Système de test d'un pneumatique selon la revendication 6 dans lequel $\beta$ vaut environ 1,04.

**8.** Système de test d'un pneumatique selon la revendication 6, dans lequel $\beta$ est un paramètre de mise au point utilisé dans la mise au point du système.

**9.** Système de test d'un pneumatique selon l'une des revendications 2 à 4 dans lequel le seuil de pente prédéterminé pour la différence entre $\alpha_1$ et $\alpha_2$ est de l'ordre de 30%.

**10.** Système de test d'un pneumatique selon l'une des revendications 2 à 9, dans lequel le dispositif de modulation de l'effort longitudinal agit sur la commande de freinage et on initialise (i=0) les opérations indiquées à chaque début de manoeuvre de freinage.

**11.** Système de test d'un pneumatique selon l'une des revendication 2 à 9, dans lequel le dispositif de modulation de l'effort longitudinal agit sur le couple moteur aux roues et on initialise (i=0) les opérations indiquées à chaque demande de variation du couple moteur supérieure à un seuil de couple prédéterminé.

**12.** Système de test d'un pneumatique selon l'une des revendications 2 à 11, dans lequel on procède, avant toutes les opérations exploitant la courbe de variation de $\mu_i$ en fonction de $G_i$, à une correction du départ de ladite courbe en éliminant les premières paires réelles $(\mu_i, G_i)$ tant que la variation de $\mu_i$ en fonction de $G_i$ n'est pas sensiblement constante et en recherchant le glissement $G_0$ associé à un coefficient d'adhérence nul tel que la paire $(0, G_0)$ et les paires non éliminées $(\mu_i, G_i)$ sont sensiblement alignées, et utilisant une courbe partant de $(0, G_0)$ et rejoignant les paires non éliminées $(\mu_i, G_i)$, de sorte que, pour toute valeur de $G_i$ plus grande que $G_0$, $G_i$ est remplacée par $G_i - G_0$.

**13.** Système de test d'un pneumatique selon l'une des revendications 2 à 12 dans lequel, lorsque la variation par rapport au temps du glissement devient supérieure à un seuil de variation prédéterminé, on procède, avant toutes les opérations exploitant la courbe de variation de $\mu_i$ en fonction de $G_i$, à une correction de la fin de ladite courbe en remplaçant les valeurs de $\mu_i$ correspondant à des glissements amenant la variation par rapport au temps du glissement au-delà dudit seuil de variation prédéterminé, par des valeurs corrigées comme suit :

$$\mu_i^{Corr} = \mu_i \cdot \left[ Max\left( \frac{dG}{dt}; 1 \right) \right]^{-ACorr}$$

où « Acorr » est un paramètre prédéterminé.

**14.** Système de test d'un pneumatique selon la revendication 13, dans lequel « Acorr » vaut environ 0,2.

**15.** Système de test en glissement d'un pneumatique selon la revendication 13 dans lequel « Acorr » est utilisé comme paramètre de mise au point.

**16.** Système de test d'un pneumatique selon la revendication 1, dans lequel le paramètre P est l'angle de dérive $\delta$ et le paramètre Q est la poussée de dérive F, utilisant des moyens pour imprimer un angle de dérive à un pneu en test sur un sol, les moyens étant équipé d'un système de commande d'un paramètre « $\xi$ » en fonction des ordres provenant d'un moyen de commande du test, et en fonction des ordres délivrés par un contrôleur visant à maintenir le fonctionnement du pneumatique à une valeur prédéterminée de la poussée de dérive $F^{det}$, le contrôleur utilisant au moins une valeur optimale $\delta^{Opt}$ de l'angle de dérive correspondant à la valeur maximale de la poussée de dérive $F^{det}$, ledit contrôleur comportant des moyens pour effectuer les opérations suivantes :

• lors de chaque activation du système de commande de variation de $\xi$, pour des niveaux « i » différents d'angle de dérive, relever différentes valeurs de $F_{Yi}$ (mesurées ou calculées), et l'angle de dérive associé $\delta_i$ obtenue par estimation ou mesure directe,

• Déterminer des coefficients $A_{[avg/p]}$ par calcul direct ou par une régression appropriée, à partir d'un nombre suffisant de paires $(F_i, \delta_i)$, de façon à modéliser une première courbe de variation $F_i = f(\delta_i, A_{[avg/p]})$ incluant obligatoirement par convention l'origine, et la ou les paires $(F_i, \delta_i)$, dans lesquelles $\mu_i$ est différent de zéro,

• Déterminer un indicateur de la pente moyenne $\alpha_1$ de ladite première courbe de variation,

• Déterminer des coefficients $B_{[avg/p]}$ par calcul direct ou par une régression appropriée, à partir d'un nombre suffisant de paires $(F_i, \delta_i)$, de façon à modéliser une deuxième courbe de variation $F_i = f(\delta_i, B_{[avg/p]})$ incluant la ou les paires $(F_i, \delta_i)$, dans lesquelles $\mu_i$ est différent de zéro,

• Déterminer un indicateur de la pente moyenne $\alpha_2$ de la deuxième courbe de variation,

• Tant que la différence entre $\alpha_1$ et $\alpha_2$ est inférieure à un seuil de pente prédéterminé, reprendre les opérations précédentes pour chaque nouvelle acquisition de paire de valeurs $(\delta_i, F_i)$,

• Dès que la différence entre $\alpha_1$ et $\alpha_2$ dépasse le seuil de pente prédéterminé, déterminer un glissement cible $G^{Cavg}$ en utilisant au moins la dernière paire de valeurs $(\delta_i, F_i)$.

**Claims**

1. Tyre testing system in which a characteristic parameter Q of the functioning of a tyre under test varies as a function of a parameter P according to a certain law, an optimum value of the said parameter P being imposed by a controller directly or indirectly so as to act on at least one of the elements chosen from the group comprising the rotation torque applied to the tyre, the steering angle of the tyre, the camber angle of the tyre and the vertical force applied to the tyre, in which the controller comprises means for:

   • determining coefficients $A_{[avg/p]}$ by direct calculation or by an appropriate regression, from a sufficient number of pairs $(P_i, Q_i)$, so as to model a first variation curve $Q_i = f(P_i, A_{[avg/p]})$ necessarily including by convention the origin, and the pair or pairs $(Q_i, P_i)$, in which $\mu_i$ is different from zero,
   • determining an indicator of the average slope $\alpha_1$ of the said first variation curve,
   • determining coefficients $B_{[avg/p]}$ by direct calculation or by an appropriate regression, from a sufficient number of pairs $(Q_i, P_i)$, so as to model a second variation curve $Q_i = f(P_i, B_{[avg/p]})$ including the pair or pairs $(Q_i, P_i)$, in which Q; is different from zero,
   • determining a indicator of the average slope $\alpha_2$ of the second variation curve,
   • as long as the difference between $\alpha_1$ and $\alpha_2$ is less than a predetermined slope threshold, repeating the previous operations for each new acquisition of a pair of values $(P_i, Q_i)$,
   • as soon as the difference between $\alpha_1$ and $\alpha_2$ exceeds the predetermined slope threshold, determining a target slip $P^{Cavg}$ using at least the last pair of values $(P_i, Q_i)$.

2. Tyre testing system according to Claim 1, in which the parameter P is the slip G on the tyre and the characteristic parameter Q is the coefficient of friction $\mu$ of the tyre, the system comprising means for imparting a longitudinal force to the tyre, means of modulating the longitudinal force and means for calculating the slip parameter $G^{Opt}$ at each activation of the means for imparting a longitudinal force to the tyre in the following manner:

   • determining coefficients $A_{[avg/p]}$ by direct calculation or by an appropriate regression, from a sufficient number of pairs $(\mu_i, G_i)$, so as to model a first variation curve $\mu_i = f(G_i, A_{[avg/p]})$ necessarily including by convention the origin, and the pair or pairs $(\mu_i, G_i)$, in which $\mu_i$ is different from zero,
   • determining an indicator of the average slope $\alpha_1$ of the said first variation curve,
   • determining coefficients $B_{[avg/p]}$ by direct calculation or by an appropriate regression, from a sufficient number of pairs $(\mu_i, G_i)$, so as to model a second variation curve $\mu_i = f(G_i, B_{[avg/p]})$ including the pair or pairs $(\mu_i, G_i)$, in which $\mu_i$ is different from zero,
   • determining an indicator of the average slope $\alpha_2$ of the second variation curve,
   • as long as the difference between $\alpha_1$ and $\alpha_2$ is less than a predetermined slope threshold, repeating the previous operations for each new acquisition of a pair of values $(G_i, \mu_i)$,
   • as soon as the difference between $\alpha_1$ and $\alpha_2$ exceeds the predetermined slope threshold, determining a target slip $G^{Cavg}$ using at least the last pair of values $(G_i, \mu_i)$.

3. Tyre testing system according to Claim 2, in which, as soon as the slip $G_i$ exceeds a predetermined threshold, the target slip $G^{Cavg}$ is determined using at least the last pair of values $(G_i, \mu_i)$.

4. Tyre testing system according to Claim 2 or 3, in which:

   • the first variation curve is a first straight line $\mu_i = A_{avg} \bullet G_i$, including by convention the origin, and the pair or pairs $(\mu_i, G_i)$, obtained by a first linear regression calculating a first coefficient $A_{avg}$,
   • the second variation curve is a second straight line $\mu_i = A_{lin} \bullet G_i + B_{lin}$ including the pair or pairs $(\mu_i, G_i)$, obtained by a second linear regression calculating coefficients $A_{lin}$ and $B_{lin}$.

5. Tyre testing system according to one of Claims 2 to 4, in which the target slip $G^{Cavg}$ is determined as being equal to the last value $G_i$.

6. Tyre testing system according to one of Claims 2 to 4, in which the target slip $G^{Cavg} = \beta \cdot \dfrac{\mu^{MAX}}{A^{AVG}}$ with β a fine-tuning parameter is determined.

7. Tyre testing system according to Claim 6, in which β is equal to approximately 1.04.

8. Tyre testing system according to Claim 6, in which β is a fine-tuning parameter used in the fine tuning of the system.

9. Tyre testing system according to one of Claims 2 to 4, in which the slope threshold predetermined for the difference between $\alpha_1$ and $\alpha_2$ is around 30%.

10. Tyre testing system according to one of Claims 2 to 9, in which the device for modulating the longitudinal force acts on the braking control and the operations indicated at each start of a braking manoeuvre are initialised (i=0).

11. Tyre testing system according to one of Claims 2 to 9, in which the device modulating the longitudinal force acts on the driving torque at the wheels and the operations indicated are initialised (i=0) at each request for a variation in the driving torque above a predetermined torque threshold.

12. Tyre testing system according to one of Claims 2 to 11, in which, before all the operations using the curve of variation of $\mu_i$ as a function of $G_i$, a correction of the start of the said curve is carried out by eliminating the first real pairs $(\mu_i, G_i)$ as long as the variation in $\mu_i$ as a function of $G_i$ is not substantially constant and by seeking the slip $G_0$ associated with a zero coefficient of friction such that the pair $(0, G_0)$ and the non-eliminated pairs $(\mu_i, G_i)$ are substantially aligned, and using a curve starting from $(0, G_0)$ and joining the non-eliminated pairs $(\mu_i, G_i)$, so that, for any value of $G_i$ greater than $G_0$, $G_i$ is replaced by $G_i - G_0$.

13. Tyre testing system according to one of Claims 2 to 12, in which, when the variation in the slip with respect to time becomes greater than a predetermined variation threshold, a correction to the end of the said curve is carried out, before all the operations using the curve of variation of $\mu_i$ as a function of $G_i$, by replacing the values of $\mu_i$ corresponding to slips bringing the variation in the slip with respect to time beyond the said predetermined variation threshold, by corrected values as follows:

$$\mu_i^{Corr} = \mu_i \cdot \left[ Max\left( \frac{dG}{dt} ; 1 \right) \right]^{-ACorr}$$

where "Acorr" is a preset parameter.

14. Tyre testing system according to Claim 13, in which "Acorr" is equal to approximately 0.2.

15. Tyre testing system according to Claim 13, in which "Acorr" is used as a fine-tuning parameter.

16. Tyre testing system according to Claim 1, using means for imparting a drift angle to a tyre under test on the ground, the means being equipped with a system for controlling a parameter "ξ" according to instructions coming from a test control means and according to instructions delivered by a controller aimed at maintaining the functioning of the tyre at a predetermined value of the drift thrust $F^{det}$, the controller using at least one optimum value $\delta^{Opt}$ of the

drift angle corresponding to the maximum value of the drift thrust $F^{det}$, the said controller comprising means for performing the following operations:

- each time the system for controlling the variation in $\xi$ is activated, for different levels "i" of drift angle, reading various values of $F_{Yi}$ (measured or calculated), and the associated drift angle $\delta_i$ obtained by estimation or direct measurement,
- determining coefficients $A_{[avg/p]}$ by direct calculation or by an appropriate regression, from a sufficient number of pairs $(F_i, \delta_i)$, so as to model a first variation curve $F_i = f(\delta_i, A_{[avg/p]})$ necessarily including by convention the origin, and the pair or pairs $(F_i, \delta_i)$, in which $\mu_i$ is different from zero,
- determining an indicator of the average slope $\alpha_1$ of the said first variation curve,
- determining coefficients $B_{[avg/p]}$ by direct calculation or by an appropriate regression, from a sufficient number of pairs $(F_i, \delta_i)$, so as to model a second variation curve $F_i = f(\delta_i, B_{[avg/p]})$ including the pair or pairs $(F_i, \delta_i)$, in which $\mu_i$ is different from zero,
- determining an indicator of the average slope $\alpha_2$ of the second variation curve,
- as long as the difference between $\alpha_1$ and $\alpha_2$ is less than a predetermined slope threshold, repeating the previous operations for each new acquisition of a pair of values $(\delta_i, F_i)$,
- as soon as the difference between $\alpha_1$ and $\alpha_2$ exceeds the predetermined slope threshold, determining a target slip $G^{Cavg}$ using at least the last pair of values $(\delta_i, F_i)$.

## Patentansprüche

1. Reifentestsystem, bei dem sich ein Parameter Q, der für den Lauf eines im Test befindlichen Reifens charakteristisch ist, in Abhängigkeit von einem Parameter P gemäß einem bestimmten Gesetz ändert, wobei durch einen Controller direkt oder indirekt ein optimaler Wert des Parameters P festgelegt wird, um auf mindestens eines der Elemente, die aus der Gruppe bestehend aus dem am Reifen wirkenden Drehmoment, dem Einschlagwinkel des Reifens, dem Sturzwinkel des Reifens und der auf den Reifen wirkenden Last gewählt sind, einzuwirken, bei dem der Controller Mittel umfasst zum:

- Bestimmen von Koeffizienten $A_{(avg/p)}$ durch direktes Berechnen oder durch eine geeignete Regression aus einer ausreichenden Anzahl Paare $(P_i, Q_i)$, um eine erste Ganglinie $Q_i = f(P_i, A_{(avg/p)})$ zu modellieren, die vereinbarungsgemäß obligatorisch den Ursprung und das oder die Paare $(Q_i, P_i)$ einschließt, bei denen $\mu_i$ ungleich null ist,

**dadurch gekennzeichnet, dass** der Controller Mittel umfasst zum

- Bestimmen eines Gradmessers für die durchschnittliche Steigung $\alpha_1$ der ersten Ganglinie,
- Bestimmen von Koeffizienten $B_{(avg/p)}$ durch direktes Berechnen oder durch eine geeignete Regression aus einer ausreichenden Anzahl Paare $(Q_i, P_i)$, um eine zweite Ganglinie $Q_i = f(P_i, B_{(avg/p)})$ zu modellieren, die das oder die Paare $(Q_i, P_i)$ einschließt, bei denen $Q_i$ ungleich null ist,
- Bestimmen eines Gradmessers für die durchschnittliche Steigung $\alpha_2$ der zweiten Ganglinie,
- Wiederaufnehmen der vorhergehenden Operationen für jedes neu erfasste Wertepaar $(P_i, Q_i)$, solange der Unterschied zwischen $\alpha_1$ und $\alpha_2$ kleiner als ein festgelegter Steigungsschwellenwert ist,
- sobald der Unterschied zwischen $\alpha_1$ und $\alpha_2$ den festgelegten Steigungsschwellenwert übersteigt, Bestimmen eines Zielschlupfes $P^{Cavg}$ unter Verwendung mindestens des letzten Wertepaares $(P_i, Q_i)$.

2. Reifentestsystem nach Anspruch 1, bei dem der Parameter P der Schlupf G des Reifens ist und der charakteristische Parameter Q der Kraftbeiwert $\mu$ des Reifens ist, wobei das System Mittel, um dem Reifen eine Umfangskraft aufzuprägen, Mittel zum Modulieren der Umfangskraft und Mittel, um den Schlupfparameter $G^{Opt}$ bei jeder Aktivierung der Mittel zu berechnen, umfasst, um dem Reifen eine Umfangskraft auf folgende Weise aufzuprägen:

- Bestimmen von Koeffizienten $A_{(avg/p)}$ durch direktes Berechnen oder durch eine geeignete Regression aus einer ausreichenden Anzahl Paare $(\mu_i, G_i)$, um eine erste Ganglinie $\mu_i = f(G_i, A_{(avg/p)})$ zu modellieren, die vereinbarungsgemäß obligatorisch den Ursprung und das oder die Paare $(\mu_i, G_i)$ einschließt, bei denen $\mu_i$ ungleich null ist,
- Bestimmen eines Gradmessers für die durchschnittliche Steigung $\alpha_1$ der ersten Ganglinie,
- Bestimmen von Koeffizienten $B_{(avg/p)}$ durch direktes Berechnen oder durch eine geeignete Regression aus einer ausreichenden Anzahl Paare $(\mu_i, G_i)$, um eine zweite Ganglinie $\mu_i = f(G_i, B_{(avg/p)})$ zu modellieren, die das

oder die Paare ($\mu_i$, $G_i$) einschließt, bei denen $\mu_i$ ungleich null ist,
• Bestimmen eines Gradmessers für die durchschnittliche Steigung $\alpha_2$ der zweiten Ganglinie,
• Wiederaufnehmen der vorhergehenden Operationen für jedes neu erfasste Wertepaar ($G_i$, $\mu_i$), solange der Unterschied zwischen $\alpha_1$ und $\alpha_2$ kleiner als ein festgelegter Steigungsschwellenwert ist,
• sobald der Unterschied zwischen $\alpha_1$ und $\alpha_2$ den festgelegten Steigungsschwellenwert übersteigt, Bestimmen eines Zielschlupfes $G^{Cavg}$ unter Verwendung mindestens des letzten Wertepaares ($G_i$, $\mu_i$).

3. Reifentestsystem nach Anspruch 2, bei dem, sobald der Schlupf $G_i$ einen festgelegten Schwellenwert übersteigt, der Zielschlupf $G^{Cavg}$ unter Verwendung mindestens des letzten Wertepaares ($G_i$, $\mu_i$) bestimmt wird.

4. Reifentestsystem nach Anspruch 2 oder 3, bei dem

• die erste Ganglinie eine erste Gerade $\mu_i = A_{avg} \cdot G_i$ ist, die vereinbarungsgemäß den Ursprung und das oder die Paare ($\mu_i$, $G_i$) einschließt, wobei sie durch eine erste lineare Regression erhalten wird, bei der ein erster Koeffizient $A_{avg}$ berechnet wird,
• die zweite Ganglinie eine zweite Gerade $\mu_i = A_{lin} \cdot G_i + B_{lin}$ ist, die das oder die Paare ($\mu_i$, $G_i$) einschließt, wobei sie durch eine zweite lineare Regression erhalten wird, bei der die Koeffizienten $A_{lin}$ und $B_{lin}$ berechnet werden.

5. Reifentestsystem nach einem der Ansprüche 2 bis 4, bei dem der Zielschlupf $G^{Cavg}$ als gleich dem letzten Wert $G_i$ bestimmt wird.

6. Reifentestsystem nach einem der Ansprüche 2 bis 4, bei dem der Zielschlupf als $G^{Cavg} = \beta \cdot \dfrac{\mu^{MAX}}{A^{AVG}}$ bestimmt wird, wobei $\beta$ ein Einstellparameter ist.

7. Reifentestsystem nach Anspruch 6, bei dem $\beta$ ungefähr 1,04 beträgt.

8. Reifentestsystem nach Anspruch 6, bei dem $\beta$ ein Einstellparameter ist, der beim Einstellen des Systems verwendet wird.

9. Reifentestsystem nach einem der Ansprüche 2 bis 4, bei dem der festgelegte Steigungsschwellenwert für den Unterschied zwischen $\alpha_1$ und $\alpha_2$ in der Größenordnung von 30 % ist.

10. Reifentestsystem nach einem der Ansprüche 2 bis 9, bei dem die Vorrichtung zum Modulieren der Umfangskraft auf die Bremssteuerung einwirkt und die angegebenen Operationen bei jedem Bremsmanöverbeginn initialisiert werden (i = 0).

11. Reifentestsystem nach einem der Ansprüche 2 bis 9, bei dem die Vorrichtung zum Modulieren der Umfangskraft auf das Antriebsmoment an den Rädern einwirkt und die angegebenen Operationen bei jeder Anforderung einer Änderung des Antriebsdrehmoments, die größer als ein festgelegter Drehmomentschwellenwert ist, initialisiert werden (i = 0).

12. Reifentestsystem nach einem der Ansprüche 2 bis 11, bei dem vor allen Operationen, welche die Ganglinie von $\mu_i$ in Abhängigkeit von $G_i$ nutzen, eine Korrektur des Anfangs der Linie vorgenommen wird, indem die ersten realen Paare ($\mu_i$, $G_i$) entfernt werden, solange die Änderung von $\mu_i$ in Abhängigkeit von $G_i$ nicht im Wesentlichen konstant ist, und indem der Schlupf $G_0$ ermittelt wird, der einem Kraftbeiwert null zugeordnet ist, sodass das Paar (0, $G_0$) und die nicht entfernten Paare ($\mu_i$, $G_i$) im Wesentlichen in gerader Linie angeordnet sind, und indem eine Ganglinie verwendet wird, die von (0, $G_0$) losgeht und die nicht entfernten Paare ($\mu_i$, $G_i$) verbindet, derart, dass alle Werte $G_i$, die größer als $G_0$ sind, durch $G_i$ - $G_0$ ersetzt werden.

13. Reifentestsystem nach einem der Ansprüche 2 bis 12, bei dem, wenn die Änderung des Schlupfes, bezogen auf die Zeit, größer als ein festgelegter Änderungsschwellenwert wird, vor allen Operationen, welche die Ganglinie von $\mu_i$ in Abhängigkeit von $G_i$ nutzen, eine Korrektur des Endes der Linie vorgenommen wird, bei der die Werte von $\mu_i$, die einem Schlupf entsprechen, der die Änderung Schlupfes, bezogen auf die Zeit, über die festgelegte Änderungsschwelle hinwegbringt, durch korrigierte Werte wie folgt ersetzt werden:

$$\mu_i^{Corr} = \mu_i \cdot \left[ Max\left(\frac{dG}{dt};1\right)\right]^{-ACorr}$$

wobei "Acorr" ein festgelegter Parameter ist.

14. Reifentestsystem nach Anspruch 13, bei dem "Acorr" ungefähr 0,2 beträgt.

15. Reifenschlupftestsystem nach Anspruch 13, bei dem "Acorr" als Einstellparameter verwendet wird.

16. Reifentestsystem nach Anspruch 1, bei dem der Parameter P der Schräglaufwinkel $\delta$ ist und der Parameter Q die Schräglauf-Seitenkraft F ist, das Mittel verwendet, um einem auf dem Boden im Test befindlichen Reifen einen Schräglaufwinkel aufzuprägen, wobei die Mittel mit einem System zur Steuerung eines Parameters "$\xi$" in Abhängigkeit von Befehlen, die von einem Teststeuermittel kommen, und in Abhängigkeit von Befehlen, die von einem Controller geliefert werden, der anstrebt, den Lauf des Reifens bei einem festgelegten Wert der Schräglauf-Seitenkraft $F^{det}$ beizubehalten, ausgestattet sind, wobei der Controller mindestens einen optimalen Wert $\delta^{Opt}$ des Schräglaufwinkels verwendet, der dem Maximalwert der Schräglauf-Seitenkraft $F^{det}$ entspricht, wobei der Controller Mittel umfasst, um die folgenden Operationen durchzuführen:

- bei jeder Aktivierung des Systems zur Steuerung der Änderung von $\xi$ für verschiedene Stufen "i" des Schräglaufwinkels Aufnehmen von verschiedenen (gemessenen oder berechneten) Werten von $F_{Yi}$ und des zugeordneten Schräglaufwinkels $\delta_i$, der durch Schätzen oder direktes Messen erhalten wird,
- Bestimmen von Koeffizienten $A_{(avg/p)}$ durch direktes Berechnen oder durch eine geeignete Regression aus einer ausreichenden Anzahl Paare $(F_i, \delta_i)$, um eine erste Ganglinie $F_i = f(\delta_i, A_{(avg/p)})$ zu modellieren, die vereinbarungsgemäß obligatorisch den Ursprung und das oder die Paare $(F_i, \delta_i)$ einschließt, bei denen $\mu_i$ ungleich null ist,
- Bestimmen eines Gradmessers für die durchschnittliche Steigung $\alpha_1$ der ersten Ganglinie,
- Bestimmen von Koeffizienten $B_{(avg/p)}$ durch direktes Berechnen oder durch eine geeignete Regression aus einer ausreichenden Anzahl Paare $(F_i, \delta_i)$, um eine zweite Ganglinie $F_i = f(\delta_i, B_{(avg/p)})$ zu modellieren, die das oder die Paare $(F_i, \delta_i)$ einschließt, bei denen $\mu_i$ ungleich null ist,
- Bestimmen eines Gradmessers für die durchschnittliche Steigung $\alpha_2$ der zweiten Ganglinie,
- Wiederaufnehmen der vorhergehenden Operationen für jedes neu erfasste Wertepaar $(\delta_i, F_i)$, solange der Unterschied zwischen $\alpha_1$ und $\alpha_2$ kleiner als ein festgelegter Steigungsschwellenwert ist,
- sobald der Unterschied zwischen $\alpha_1$ und $\alpha_2$ den festgelegten Steigungsschwellenwert übersteigt, Bestimmen eines Zielschlupfes $G^{Cavg}$ unter Verwendung mindestens des letzten Wertepaares $(\delta_i, F_i)$.

$$\mu = A^{LIN} + B^{LIN}$$

$$\mu = A^{AVG} \cdot G$$

Figure 1

Go = 3 %

Figure 2

Figure 3

Figure 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   EP 1372049 A